# EUROPÄISCHE PATENTSCHRIFT

(11) **EP 4 573 617 B1**
(45) Veröffentlichungstag und Bekanntmachung des Hinweises auf die Patenterteilung: **25.03.2026**
(21) Anmeldenummer: 23797666.7
(22) Anmeldetag: 11.10.2023
(51) Int. Cl.: H01M 10/613, H01M 10/625, H01M 10/6552, H01M 10/6553, H01M 10/6554, H01M 10/6567

(54) **KÜHLMITTELSAMMELEINRICHTUNG MIT STARREN ROHRVERBINDUNGEN**
COOLANT COLLECTION DEVICE WITH RIGID TUBE CONNECTIONS
DISPOSITIF DE COLLECTE DE FLUIDE DE REFROIDISSEMENT AVEC CONNEXIONS DE TUBE RIGIDES

(30) Priorität: 25.10.2022 DE 102022211309
(43) Veröffentlichungstag der Anmeldung: 25.06.2025
(73) Patentinhaber: Siemens Mobility GmbH, 80997 München (DE)
(72) Erfinder: TUMA, Claus, 91207 Lauf/Peg. (DE)
(74) Vertreter: Siemens Patent Attorneys
(86) Internationale Anmeldenummer: PCT/EP2023/078207
(87) Internationale Veröffentlichungsnummer: WO 2024/088759

(56) Entgegenhaltungen:
- WO-A1-2010/094787
- CN-A- 106 945 506
- DE-U1- 20 121 501
- FR-A1- 2 781 311
- FR-A1- 3 080 166
- US-A1- 2005 046 187
- US-A1- 2022 243 849

## Beschreibung

Die Erfindung betrifft eine Kühlmittelsammeleinrichtung. Außerdem bezieht sich die Erfindung auf ein Batterie-Kühlmittelverteilsystem für ein Fahrzeug. Zudem betrifft die Erfindung ein Fahrzeug. Weiterhin betrifft die Erfindung ein Verfahren zum Herstellen einer Kühlmittelsammeleinrichtung. Überdies betrifft die Erfindung ein Verfahren zum Herstellen eines Batterie-Kühlmittelverteilsystems.

Der Einsatz von Elektrofahrzeugen findet aktuell eine immer weitere Verbreitung. Als Energiequelle weisen Elektrofahrzeuge in der Regel umfangreiche Batteriepakete auf, die eine Vielzahl von Batteriezellen umfassen. Die Batteriezellen erzeugen im Betrieb eine Menge Abwärme. Außerdem muss die Temperatur der Batteriezellen in einem vorbestimmten Temperaturbereich gehalten werden, damit diese korrekt funktionieren und nicht beschädigt oder gar zerstört werden. Um die Batteriezellen zu kühlen, werden zum Beispiel Kühlprofile aus Aluminium zur Kühlung verwendet. Diese Kühlprofile verlaufen zwischen dem oberen Ende und dem unteren Ende eines Batteriepakets an den einzelnen Batteriezellen vorbei, umfassen in vertikaler Richtung, also zwischen dem oberen und dem unteren Ende der Kühlprofile verlaufende Kühlmittelkanäle und werden über flexible Schläuche mit waagrecht bzw. senkrecht zu den Kühlprofilen verlaufenden Kühlmittelsammelkanälen verbunden. Diese flexiblen Schläuche, welche zur Verbindung der Kühlmittelsammelkanäle mit den Kühlmittelkanälen der Kühlprofile dienen, weisen als Anschlusselemente zum Beispiel passende Fittinge oder Anschlussverschraubungen auf. Diese Anschlussverschraubungen werden einzeln in das betreffende Kühlprofil und den zugeordneten Kühlmittelsammelkanal geschraubt.

Die Enden der Kühlmittelsammelkanäle sind mit Zufuhrschläuchen bzw. Zuleitungen und Abführschläuchen bzw. Ableitungen verbunden, die das Kühlmittel von einem Kühlersystem zu dem Batteriepaket heranführen bzw. das erwärmte Kühlmittel von dem Batteriepaket abführen und dem Kühlersystem zuführen.

Allerdings erfordert die Montage der einzelnen Anschlusselemente sehr viel Handarbeit, da jedes einzelne Anschlusselement angeschraubt werden muss. Auch müssen die Anschlüsse zu dem Kühlprofil und dem Kühlsammelrohr ausreichend abgedichtet werden. Hierzu müssen jeweils pro flexiblen Schlauch vier Dichtelemente, wie zum Beispiel O-Ringe, montiert werden. Ein weiteres Problem besteht darin, dass die Kühlprofile Toleranzen von etwa 1,5 mm aufweisen, die bei der Montage der Anschlusselemente berücksichtigt werden müssen.

In US 2022 / 0 243 849 A1 ist ein Rohrleitungssystem beschrieben, bei dem Toleranzen von Bohrungen für T-Stücke durch in axialer Richtung verschiebbare Verbindungsrohre ausgeglichen werden.

In DE 201 21 501 U1 ist eine Rohrverbindung mit einem Fitting zur Verbindung einer ein temperiertes Fluid führenden Hauptleitung einer Hausinstallation mit einer Abzweigleitung geringeren Durchmessers als die Hauptleitung beschrieben.

In FR 3 080 166 A1 ist ein Kühlmittelverteilsystem mit T-Stücken und flexiblen Verbindungsrohren zwischen den T-Stücken beschrieben.

In US 2005 / 0 046 187 A1 ist eine Rohrverbindung für einen Kühlmittelkreislauf beschrieben.

In CN 106 945 506 A ist eine T-förmige Rohrleitungsverbindung mit Befestigungsschellen zur Befestigung von Leitungen an der T-förmigen Rohrleitungsverbindung beschrieben.

In WO 2010 / 094 787 A1 ist eine elektrische Energiespeichereinheit für Kraftfahrzeuge mit einem Kühlmittelverteilsystem beschrieben. Das Kühlmittelverteilsystem weist T-förmige Verbindungsstücke und zwischen den T-förmigen Verbindungsstücken angeordnete Rohrleitungen auf.

In FR 2 781 311 A wird ein segmentiertes Kühlsystem für eine Fahrzeugbatterie mit einer Mehrzahl von Batteriezellen beschrieben.

Es besteht also die Aufgabe, eine zuverlässige und gegenüber Toleranzen robuste Verbindung zwischen der Kühlmittelzufuhr bzw. Kühlmittelabfuhr und den Kühlmittelkanälen der Kühlprofile eines Batterie-Kühlmittelverteilsystems bereitzustellen, welche weniger Montagearbeit erfordert als bei einer herkömmlichen Anordnung.

Diese Aufgabe wird durch eine Kühlmittelsammeleinrichtung gemäß Patentanspruch 1, ein Batterie-Kühlmittelverteilsystem gemäß Patentanspruch 9, ein Fahrzeug gemäß Patentanspruch 10, ein Verfahren zum Herstellen einer Kühlmittelsammeleinrichtung gemäß Patentanspruch 11, und ein Verfahren zum Herstellen eines Batterie-Kühlmittelverteilsystems gemäß Patentanspruch 12 gelöst.

Die erfindungsgemäße Kühlmittelsammeleinrichtung weist zwei starre Kühlmittelsammelrohre und ein T-förmiges Verbindungsstück mit drei rohrförmigen Verbindungselementen auf. Ein starres Kühlmittelsammelrohr weist eine durch äußere und innere Einwirkung weitgehend unveränderbare Form und Struktur auf. Vorteilhaft bleiben die Form und die äußeren Abmessungen der von der Kühlmittelsammeleinrichtung umfassten Kühlmittelsammelrohre auch bei einer äußeren oder inneren Krafteinwirkung auf die Kühlmittelsammelrohre erhalten.

Die Anpassung an die bei der Anordnung von Batterie-Kühlprofilen üblichen Toleranzen von etwa 1,5 mm erfolgt vorzugsweise durch eine sogenannte schwimmende Anordnung der starren Kühlmittelsammelrohre. Das T-förmige Verbindungsstück ist dabei zwischen den starren Kühlmittelsammelrohren angeordnet und mit den starren Kühlmittelsammelrohren schwimmend aber flüssigkeitsdicht verbunden. Als schwimmende Anordnung soll eine freie Anordnung der Kühlmittelsammelrohre an dem T-förmigen Verbindungsstück ohne zusätzliche Fixierelemente, wie zum Beispiel Rohrschellen oder ähnliches, verstanden werden. Dabei soll es insbesondere bei der Montage möglich sein, die Kühlmittelsammelrohre auch im mit dem T-förmigen Verbindungsstück verbundenen Zustand noch in axialer Richtung verschieben zu können und so Toleranzen zwischen einzelnen Abschnitten des Batterie-Kühlprofils ausgleichen zu können. Ein erstes der drei rohrförmigen Verbindungselemente, welches quer zu den anderen rohrförmigen Verbindungselementen orientiert ist, ist für eine Aufnahme in einem Kühlmittelkanal eines Batterie-Kühlprofils ausgebildet.

Die zwei starren Kühlmittelsammelrohre sind mit einem zu einem Querschnitt von zwei gegenüberliegenden zweiten und dritten rohrförmigen Verbindungselementen des T-förmigen Verbindungsstücks passenden Querschnitt ausgebildet, so dass sie durch Aufsetzen auf oder Einstecken in die zweiten und dritten rohrförmigen Verbindungselemente mit dem T-förmigen Verbindungsstück schwimmend aber dichtend verbunden sind. Vorzugsweise sollte der Innendurchmesser der Kühlmittelsammelrohre dem Außendurchmesser der Enden der zweiten und dritten rohrförmigen Verbindungselemente entsprechend dimensioniert sein oder alternativ sollte der Außendurchmesser der Kühlmittelsammelrohre dem Innendurchmesser der Enden der zweiten und dritten rohrförmigen Verbindungselemente entsprechend dimensioniert sein, damit es zu einer dichtenden und in axialer Richtung vorzugsweise reibschlüssigen Verbindung kommt.

Es soll an dieser Stelle ausdrücklich erwähnt werden, dass eine Kühlmittelsammeleinrichtung bevorzugt mehr als ein T-förmiges Verbindungsstück und auch mehr als zwei starre Kühlmittelsammelrohre je nach Anzahl der Kühlrippen des Batterie-Kühlprofils, durch die Kühlmittelkanäle die Kühlflüssigkeit führen aufweist. Bevorzugt umfasst eine Kühlmittelsammeleinrichtung bei einer natürlichen Zahl von n Kühlrippen auch mindestens n T-förmige Verbindungsstücke und mindestens n + 1 starre Kühlmittelsammelrohre.

Vorteilhaft kann der Montageaufwand im Vergleich zu herkömmlichen Kühlmittelsammeleinrichtungen stark reduziert werden. Dabei können starre Kühlmittelsammelrohre verwendet bzw. beibehalten werden, jedoch aufgrund der schwimmenden Anordnung eine Längenanpassung der starren Kühlmittelsammelrohre an die erwähnten Toleranzen des Kühlprofils entfallen. Die starren Kühlmittelsammelrohre können vielmehr bei der Montage relativ zu den T-förmigen Verbindungsstücken in axialer Richtung verschoben werden und andererseits auch direkt mit einem Zufuhrschlauch oder Abfuhrschlauch verbunden werden. Vorteilhaft kann durch die schwimmende Kombination aus den starren Kühlmittelsammelrohren und dem T-förmigen Verbindungsstück eine aufwändig zu montierende Anordnung aus einem Anschlusselement und dazu passenden Fittings oder Anschlussverschraubungen sowie einem Kühlmittelsammelkanal mit einer Vielzahl von Dichtstellen ersetzt werden.

Weiterhin weist das T-förmige Verbindungsstück eine Fixiereinheit zum Fixieren an dem Batterie-Kühlprofil auf. Dabei erfolgt das Fixieren des T-förmigen Verbindungsstücks an einer sogenannten Kühlprofilplatte oder Kühlprofilblende, die mit dem Kühlprofil fest, vorzugsweise einstückig verbunden ist. Die Kühlprofilplatte bietet eine plane Auflagefläche, auf der die erfindungsgemäße Kühlmittelsammeleinrichtung und insbesondere das T-förmige Verbindungsstück positioniert und fixiert werden kann. Vorteilhaft kann durch die Fixierung ein Lösen der Kühlmittelsammeleinrichtung von dem Batterie-Kühlprofil, beispielsweise in Folge von Vibrationen oder äußerer mechanischer Gewalteinwirkung, vermieden werden.

Die Fixiereinheit weist eine Schraubstelle zum Verschrauben mit dem Batterie-Kühlprofil bzw. der Kühlprofilplatte des Batterie-Kühlprofils auf. Vorteilhaft kann eine Montage oder Demontage des T-förmigen Verbindungsstücks an der Kühlprofilplatte durch eine einfache Schraubbewegung erfolgen und gleichzeitig eine zuverlässige Fixierung des T-förmigen Verbindungsstücks an der Kühlprofilplatte erreicht werden.

Wie bereits andeutungsweise erwähnt, sind die starren Kühlmittelsammelrohre der erfindungsgemäßen Kühlmittelsammeleinrichtung schwimmend mit dem T-förmigen Verbindungsstückverbunden. Eine solche schwimmende Verbindung erlaubt ein Verschieben der starren Kühlmittelsammelrohre in Axialrichtung und damit eine Anpassung der axialen Relativposition der Kühlmittelsammelrohre zu den zweiten und dritten rohrförmigen Verbindungselementen des T-förmigen Verbindungsstücks. Auf diese Weise lassen sich Toleranzen des Batterie-Kühlprofils ausgleichen. Vorteilhaft lassen sich die starren Kühlmittelsammelrohre leicht in einer gewünschten bzw. angepassten Position relativ zu dem T-förmigen Verbindungsstück mit diesem verbinden oder von diesem lösen. Aufgrund der leichten Lösbarkeit der einzelnen Bauelemente durch ein einfaches Auseinanderziehen der Kühlmittelsammelrohre und des T-förmigen Verbindungsstücks können an der erfindungsgemäßen Kühlmittelsammeleinrichtung sehr leicht Wartungsarbeiten durchgeführt werden. Weiterhin ist es auch leicht möglich, die starren Kühlmittelsammelrohre zu demontieren und an einer anderen Kühlmittelsammeleinrichtung wieder zu montieren. Außerdem lässt sich der effektive Abstand zwischen zwei benachbarten T-förmigen Verbindungsstücken durch die schwimmende Anordnung leicht an Toleranzen des Batterie-Kühlprofils anpassen, indem die starren Kühlmittelsammelrohre ein wenig in axialer Richtung relativ zu den T-förmigen Verbindungsstücken verschoben werden, so dass sich der Überlapp zwischen den starren Kühlmittelsammelrohren und den T-förmigen Verbindungsstücken verkleinert oder vergrößert, je nachdem, ob eine Distanz zwischen zwei benachbarten Verbindungsstücken kleiner ist oder größer als ein vorbestimmter Normalabstand.

Das erfindungsgemäße Batterie-Kühlmittelverteilsystem für ein Fahrzeug weist ein Batterie-Kühlprofil mit einem darin verlaufenden Kühlmittelkanal und eine erfindungsgemäße Kühlmittelsammeleinrichtung auf. Das Batterie-Kühlprofil befindet sich räumlich direkt bei den Batteriezellen. Die durch den darin verlaufenden Kühlmittelkanal fließende Kühlflüssigkeit führt die von den Batteriezellen erzeugte Wärme oder auch Umgebungswärme ab. Die Kühlmittelsammeleinrichtung versorgt das Batterie-Kühlprofil mit gekühlter Kühlflüssigkeit und sammelt die in dem Batterie-Kühlprofil erwärmte Kühlflüssigkeit, um sie einer Kühlereinheit zuzuführen.

Es soll auch an dieser Stelle ausdrücklich drauf hingewiesen werden, dass ein erfindungsgemäßes Batterie-Kühlmittelverteilsystem bevorzugt eine Mehrzahl von erfindungsgemäßen Kühlmittelsammeleinrichtungen umfasst, die quasi parallel zueinander zeilenartig oder spaltenartig angeordnet sind. Diese Struktur kommt dann zum Einsatz, wenn eine Kühlrippe eines Batterie-Kühlprofils eine Mehrzahl von Kühlmittelkanälen aufweist, was absolut üblich ist. Vorteilhaft kann ein Aufbau des erfindungsgemäßen Batterie-Kühlmittelverteilsystems deutlich einfacher erfolgen als der Aufbau eines herkömmlichen Batterie-Kühlmittelverteilsystems.

Bevorzugt ist das erste rohrförmige Verbindungselement der drei rohrförmigen Verbindungselemente des T-förmigen Verbindungsstücks der Kühlmittelsammeleinrichtung in den Kühlmittelkanal des Batterie-Kühlprofils des erfindungsgemäßen Batterie-Kühlmittelverteilsystems eingefügt. Vorteilhaft werden zur Verbindung des T-förmigen Verbindungsstücks mit dem Batterie-Kühlprofil keine mehrteiligen Verbindungselemente benötigt, da das erste rohrförmige Verbindungselement direkt in einen ihm zugeordneten Kühlmittelkanal eingesetzt bzw. eingefügt ist.

Das erfindungsgemäße Fahrzeug, vorzugsweise ein Elektrofahrzeug, besonders bevorzugt ein elektrisch betriebenes Schienenfahrzeug oder ein elektrisch betriebenes Flurförderfahrzeug, weist eine elektrische Batterie mit einem Batterie-Kühlmittelverteilsystem auf. Ein Flurförderfahrzeug umfasst fahrbare Fördermittel, die auf planen Flächen zum Einsatz kommen, wie zum Beispiel ein Gabelstapler.

Bei dem erfindungsgemäßen Verfahren zum Herstellen einer Kühlmittelsammeleinrichtung wird ein T-förmiges Verbindungsstück mit drei rohrförmigen Verbindungselementen mit einem ersten der drei rohrförmigen Verbindungselemente, welches quer zu den anderen rohrförmigen Verbindungselementen orientiert ist, für eine Aufnahme in einem Kühlmittelkanal eines Batterie-Kühlprofils ausgebildet. Das T-förmige Verbindungsstück wird mit einer Fixiereinheit zum Fixieren des T-förmigen Verbindungsstücks an dem Batterie-Kühlprofil, welche eine Schraubstelle zum Verschrauben der Fixiereinheit mit dem Batterie-Kühlprofil aufweist, ausgebildet.

Bildlich gesprochen bildet das erste rohrförmige Verbindungselement den vertikalen Balken des gebildeten "T" und das zweite und dritte rohrförmige Verbindungselement bilden gemeinsam den horizontalen Balken des gebildeten "T".

Es werden zwei starre Kühlmittelsammelrohre, welche eine durch äußere und innere Einwirkung weitgehend unveränderbare Form und Struktur aufweisen, mit einem zu einem Querschnitt von zwei gegenüberliegenden zweiten und dritten rohrförmigen Verbindungselementen des T-förmigen Verbindungsstücks passenden Querschnitt ausgebildet.

Das T-förmige Verbindungsstück wird schließlich zwischen den starren Kühlmittelsammelrohren angeordnet und die zweiten und dritten Verbindungselemente des T-förmigen Verbindungsstücks werden mit den starren Kühlmittelsammelrohren verbunden. Dabei werden die starren Kühlmittelsammelrohre schwimmend mit dem T-förmigen Verbindungsstück verbunden. Das erfindungsgemäße Verfahren teilt die im Zusammenhang mit der erfindungsgemäßen Kühlmittelsammeleinrichtung genannten Vorteile einer vereinfachten Montage bzw. eines vereinfachten Zusammenbaus.

Bei dem erfindungsgemäßen Verfahren zum Herstellen eines Batterie-Kühlmittelverteilsystems wird das erfindungsgemäße Verfahren zum Herstellen einer Kühlmittelsammeleinrichtung durchgeführt. Weiterhin wird das erste der drei rohrförmigen Verbindungselemente des T-förmigen Verbindungsstücks in einen Kühlmittelkanal eines Batterie-Kühlprofils eingefügt. Das erste rohrförmige Verbindungselement weist dabei einen an den Innendurchmesser des Kühlmittelkanals angepassten Außendurchmesser an. Wie später noch im Detail erläutert, kann auch ein zusätzliches Dichtelement zwischen die Innenfläche des Kühlmittelkanals und die Außenfläche des ersten rohrförmigen Verbindungselements gesetzt werden, um ein Austreten von Kühlflüssigkeit an der Verbindungsstelle dieser beiden Baugruppen zu verhindern. Das erfindungsgemäße Verfahren zum Herstellen eines Batterie-Kühlmittelverteilsystems teilt die bereits im Zusammenhang mit dem erfindungsgemäßen Batterie-Kühlmittelverteilsystem beschriebenen Vorteile einer vereinfachten Montage bzw. eines vereinfachten Zusammenbaus.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein.

Bevorzugt weist die erfindungsgemäße Kühlmittelsammeleinrichtung ein Dichtelement zur Abdichtung zwischen dem ersten rohrförmigen Verbindungselement und dem Kühlmittelkanal auf. Ein solches Dichtelement verhindert ein Herausfließen von Kühlmittel über toleranzbedingte Aussparungen bzw. Zwischenräume, welche zum Beispiel durch unterschiedliche Abmessungen, Unebenheiten, insbesondere Riefen, in der Oberfläche des ersten rohrförmigen Verbindungselements oder des Kühlmittelkanals verursacht werden, im Kontaktbereich zwischen dem ersten rohrförmigen Verbindungselement und dem Kühlmittelkanal.

Besonders bevorzugt umfasst das Dichtelement der erfindungsgemäßen Kühlmittelsammeleinrichtung einen O-Ring. Vorteilhaft können Toleranzen zwischen dem ersten rohrförmigen Verbindungselement und dem Kühlmittelkanal durch das Dichtelement ausgeglichen und der durch die Toleranzen entstehende Zwischenraum abgedichtet werden, so dass ein Austreten von Flüssigkeit an der Verbindungstelle zwischen dem T-förmigen Verbindungsstück und dem Batterie-Kühlprofil verhindert wird.

Bevorzugt weisen das zweite und dritte rohrförmige Verbindungselement jeweils einen verjüngten Endabschnitt auf. Als "verjüngt" soll verstanden werden, dass die Endabschnitte einen kleineren Außendurchmesser aufweisen als die übrigen Abschnitte der rohrförmigen Verbindungselemente des T-förmigen Verbindungsstücks. Bei einer solchen Variante werden die beiden starren Kühlmittelsammelrohre durch Aufstecken der beiden starren Kühlmittelsammelrohre auf hinsichtlich ihres Außendurchmessers leicht verjüngte Enden bzw. Endabschnitte des zweiten und dritten rohrförmigen Verbindungselements des jeweiligen T-förmigen Verbindungsstücks aufgesetzt.

Besonders bevorzugt weist der Außendurchmesser der verjüngten Endabschnitte einen etwas kleineren Wert auf als der Innendurchmesser der starren Kühlmittelsammelrohre. Ebenfalls bevorzugt weist der Außendurchmesser der starren Kühlmittelsammelrohre denselben Außendurchmesser wie der Außendurchmesser des jeweiligen T-förmigen Verbindungsstücks im vorzugsweise nicht verjüngten Mittenbereich des T-förmigen Verbindungsstücks auf. Im Grenzfall ist der Außendurchmesser der verjüngten Endabschnitte des T-förmigen Verbindungsstücks gleich bzw. fast gleich dem Innendurchmesser der starren Kühlmittelsammelrohre, so dass der Zwischenraum zwischen den Umfangsflächen der verjüngten Endabschnitte und den Innenflächen der starren Kühlmittelsammelrohre minimal ist. Vorteilhaft kann so die Außenfläche der von den starren Kühlmittelsammelrohren und dem T-förmigen Verbindungsstück gebildeten Leitungskonstruktion einen einheitlichen Durchmesser haben. Die Durchmesser sind so gewählt, dass jederzeit eine freie Bewegung möglich ist.

Bevorzugt ist der Übergang zwischen den verjüngten Endabschnitten der starren Kühlmittelsammelrohre und dem Mittenbereich des T-förmigen Verbindungsstücks als Stufe, vorzugsweise mit einer senkrecht zur Axialrichtung bzw. in Radialrichtung der zweiten und dritten rohrförmigen Verbindungselemente des T-förmigen Verbindungsstücks verlaufenden Setzstufe ausgebildet. Vorteilhaft kann die Stufenstruktur für eine Integration der starren Kühlmittelsammelrohre mit dem T-förmigen Verbindungsstück als Anschlag dienen.

Die verjüngten Endabschnitte der zweiten und dritten rohrförmigen Verbindungselemente des T-förmigen Verbindungsstücks weisen jeweils vorzugsweise mindestens eine Nut, besonders bevorzugt zwei ringförmige Nuten, auf, welche jeweils ein Dichtelement, auch bezeichnet als Dichtung, bevorzugt in Form eines O-Rings aufnimmt bzw. aufnehmen. Die Dichtungen, vorzugsweise O-Ringe erzielen eine Dichtwirkung zwischen der Außenfläche der verjüngten Enden bzw. Endabschnitte der zweiten und dritten rohrförmigen Verbindungselemente und der Innenfläche der starren Kühlmittelsammelrohre. Mit diesen Dichtungen wird ein Austreten von Kühlflüssigkeit an der Verbindungsstelle zwischen den zweiten und dritten rohrförmigen Verbindungselementen und den starren Kühlmittelsammelrohren verhindert.

Die starren Kühlmittelsammelrohre weisen bevorzugt ein festes und gegenüber üblichen Kühlmitteln beständiges Material auf. Ein solche Material umfasst bevorzugt eines der folgenden Materialarten:
- Polyethylen,
- Polytetrafluorethylen, auch mit PTFE abgekürzt,
- Fluorethylen-Propylen, abgekürzt mit FEP.

Die genannten Materialarten sind insbesondere gegenüber Glykol-Wasser-Gemischen, welche als Kühlflüssigkeit eingesetzt werden, beständig.

Es soll an dieser Stelle nochmals ausdrücklich erwähnt werden, dass in einer üblichen Fahrzeugbatterie eine Mehrzahl von Kühlprofilen nebeneinander angeordnet sind und daher die erfindungsgemäße Kühlmittelsammeleinrichtung bevorzugt auch eine Mehrzahl der T-förmigen Verbindungsstücke und mindestens drei starre Kühlmittelsammelrohre umfasst. Dabei sind die starren Kühlmittelsammelrohre durch die Mehrzahl der T-förmigen Verbindungsstücke seriell miteinander verbunden. Sie bilden eine Art Kette, wobei die T-förmigen Verbindungsstücke jeweils zwei starre Kühlmittelsammelrohre verbinden und in die Kühlmittelkanäle der nebeneinander angeordneten Kühlprofileinheiten gesteckt sind. Dabei können die starren Kühlmittelsammelrohre vorteilhaft durch einfaches Aufsetzen auf die Enden der T-förmigen Verbindungsstücke mit diesen verbunden werden, so dass die Abstände zwischen benachbarten T-förmigen Verbindungsstücken den Abständen der Kühlmittelkanäle benachbarter Kühlprofileinheiten entsprechen bzw. zu diesen passen. Bildlich gesprochen, können die starren Kühlmittelsammelrohre in Längsrichtung bzw. Axialrichtung auf den zweiten und dritten rohrförmigen Verbindungselementen der T-förmigen Verbindungsstücke verschoben werden, bis die Abstände zwischen den T-förmigen Verbindungsstücken zu den möglicherweise leicht unterschiedlichen Abständen der Kühlmittelkanäle benachbarter Kühlprofileinheiten passen. Vorteilhaft wird eine Montage der erfindungsgemäßen Kühlmittelsammeleinrichtung bei auftretenden Toleranzen der Abstände zwischen den Kühlmittelkanälen sehr erleichtert.

Bevorzugt umfasst das erfindungsgemäße Batterie-Kühlmittelverteilsystem eine Anschlussleitung zu einem Kühlersystem, wobei die Anschlussleitung direkt mit einem äußeren der starren Kühlmittelsammelrohre verbunden ist. Als Kühlersystem soll ein technisches System verstanden werden, welches eine Kühlflüssigkeit auf eine vorbestimmte reduzierte Temperatur abkühlt und einen Kühlmittelkreislauf aufrechterhält. Hierzu umfasst ein Kühlersystem einerseits einen Wärmetauscher und andererseits eine Kühlmittelpumpe, mit der das eingesetzte Kühlmittel durch den Kühlmittelkreislauf gepumpt wird. Die Anschlussleitung umfasst bevorzugt einen Zufuhrschlauch bzw. eine Zuleitung und einen Abführschlauch bzw. eine Ableitung, die gekühltes Kühlmittel von dem Kühlersystem zu dem erfindungsgemäßen Batterie-Kühlmittelverteilsystem heranführen bzw. erwärmtes Kühlmittel von dem erfindungsgemäßen Batterie-Kühlmittelverteilsystem abführen und dem Kühlersystem zuführen. Als direkte Verbindung soll ein einzelnes Verbindungselement oder Verbindungstück im Gegensatz zu der herkömmlichen Anordnung aus flexiblen Schläuchen und jeweils einem Anschlusselement, wie zum Beispiel einem passenden Fitting und/oder einer passenden Anschlussverschraubung, verstanden werden.

Vorteilhaft kann durch die direkte Verbindung eine aufwändig zu montierende herkömmliche Anordnung aus einer Mehrzahl von Anschlusselementen und einem Schlauch sowie einem starren Kühlmittelsammelkanal mit einer Vielzahl von Dichtstellen vermieden werden.

Dabei ist die direkte Verbindung bevorzugt durch eine Schnellkupplung bzw. Schnellverbindung zwischen dem äußeren starren Kühlmittelsammelrohr und der Anschlussleitung ausgebildet. Vorteilhaft können aufgrund der einfachen und schnellen Bedienbarkeit der Schnellkupplung einzelne Bauelemente, insbesondere Teile der erfindungsgemäßen Kühlmittelsammeleinrichtung, aber auch die erwähnte Anschlussleitung, leicht ausgetauscht werden.

Die Erfindung wird im Folgenden unter Hinweis auf die beigefügten Figuren anhand von Ausführungsbeispielen noch einmal näher erläutert. Es zeigen:
FIG 1 eine perspektivische Ansicht einer elektrischen Fahrzeugbatterie mit einem herkömmlichen Batterie-Kühlmittelverteilsystem,
FIG 2 eine perspektivische Ansicht des in FIG 1 gezeigten herkömmlichen Batterie-Kühlmittelverteilsystems mit einer teilweise geöffneten Kühlprofilblende,
FIG 3 eine Detailansicht auf einen flexiblen Schlauch zur Verbindung eines Kühlmittelsammelkanals mit einem Kühlmittelkanal eines Batterie-Kühlprofils,
FIG 4 eine perspektivische Schnittansicht einer Kühlmittelsammeleinrichtung gemäß einem Ausführungsbeispiel der Erfindung,
FIG 5 eine Draufsicht auf eine Kühlmittelsammeleinrichtung gemäß einem Ausführungsbeispiel der Erfindung,
FIG 6 ein Flussdiagramm, welches ein Verfahren zum Herstellen eines Batterie-Kühlmittelverteilsystems gemäß einem Ausführungsbeispiel der Erfindung veranschaulicht.

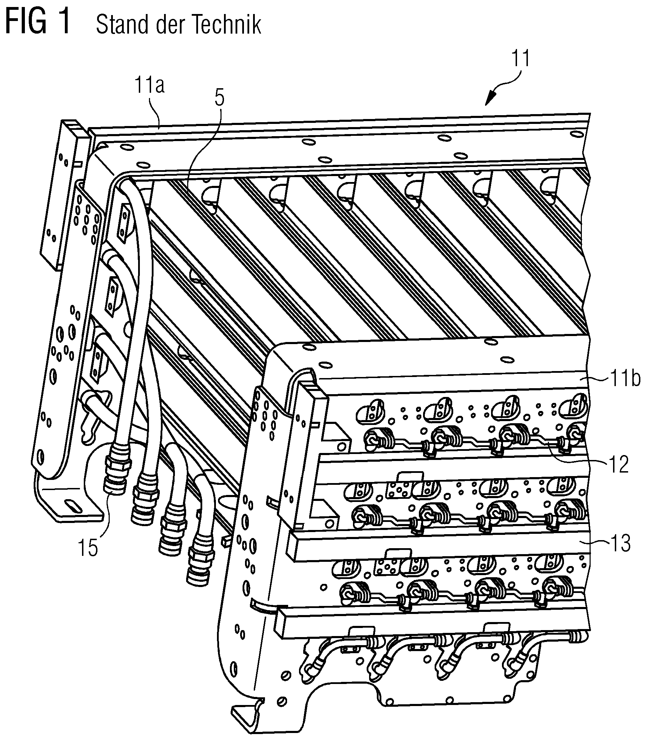

In FIG 1 ist eine perspektivische Ansicht einer elektrischen Fahrzeugbatterie 11 mit einem herkömmlichen Batterie-Kühlmittelverteilsystem veranschaulicht. Dabei sind die eigentlichen Batteriezellen weggelassen, um die zur Kühlung dieser Batteriezellen erforderlichen Strukturen besser sichtbar zu machen. Die Fahrzeugbatterie 11 umfasst als Stirnseiten eine Basisseite 11a und eine Kopfseite 11b, wobei in FIG 1 im Vordergrund die Kopfseite 11b zu erkennen ist. Zwischen der Basisseite 11a und der Kopfseite 11b verläuft ein sogenanntes Batterie-Kühlprofil 5, welches im Innern jeweils einen Kühlmittelkanal (in FIG 1 nicht sichtbar) umfasst. Der Kühlmittelkanal ist auf der jeweiligen Stirnseite (als Basisseite und Kopfseite) durch eine schlauchförmige Verbindungseinheit 12 mit einem auf der jeweiligen Stirnseite verlaufenden Kühlmittelsammelkanal 13 mit einem rechteckigen Querschnitt verbunden. Der Kühlmittelsammelkanal 13 mündet an der Seite in eine Schnittstelle zu einem Zufuhrschlauch oder Anschlussschlauch bzw. Abführschlauch 15.

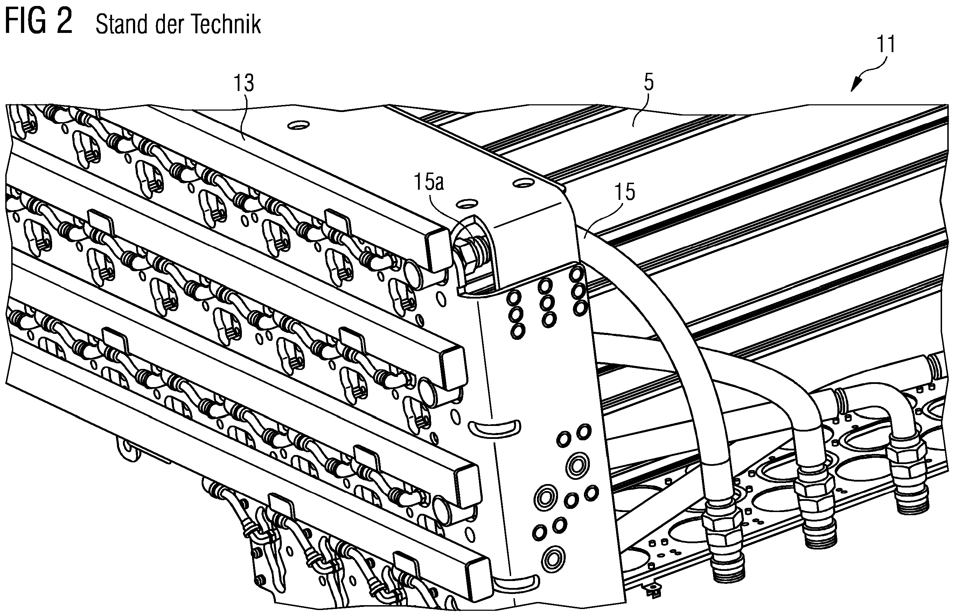

In FIG 2 ist eine perspektivische Ansicht der in FIG 2 gezeigten Fahrzeugbatterie 11 und des in FIG 1 gezeigten herkömmlichen Batterie-Kühlmittelverteilsystems gezeigt. Durch die an der im Vordergrund befindlichen Ecke der Stirnseite gezeigte Öffnung ist ein Anschluss 15a eines Zufuhrschlauchs 15 zu erkennen. Dieser Anschluss 15a ist mit einem Kühlmittelsammelkanal 13 verbunden. Die Kühlmittelsammelkanäle 13 verlaufen auf der Stirnseite parallel zueinander und bilden die Schnittstelle zwischen den Zufuhrschläuchen 15 und den Batterie-Kühlprofilen 5.

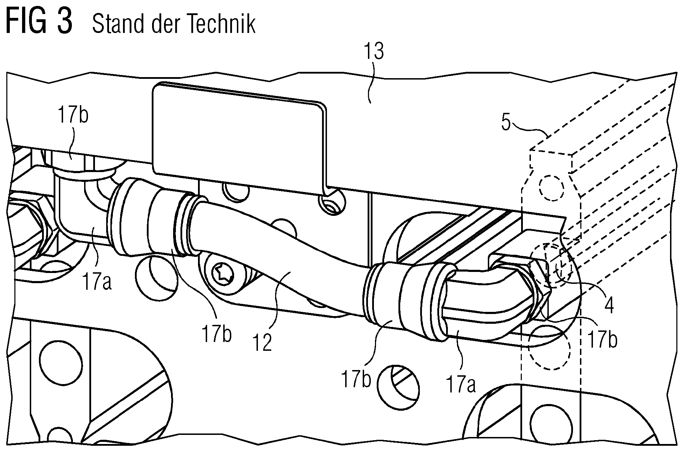

In FIG 3 ist eine Detailansicht auf einen flexiblen Schlauch bzw. eine schlauchförmige Verbindungseinheit 12 zur Verbindung eines Kühlmittelsammelkanals 13 mit einem Kühlmittelkanal 4 (gestrichelt gezeichnet) eines Batterie-Kühlprofils 5 dargestellt. Der Kühlmittelkanal 4 befindet sich im Inneren eines Batterie-Kühlprofils 5 und verläuft senkrecht zu dem zugeordneten Kühlmittelsammelkanal 13. Wie bereits erwähnt, werden für die Verbindung zwischen dem Kühlmittelsammelkanal 13 und dem Kühlmittelkanal 4 zum Beispiel passende Fittinge 17a oder Anschlussverschraubungen 17b benötigt. Die Anschlussverschraubungen 17b werden einzeln in das betreffende Kühlprofil 5 und den zugeordneten Kühlmittelsammelkanal 13 geschraubt.

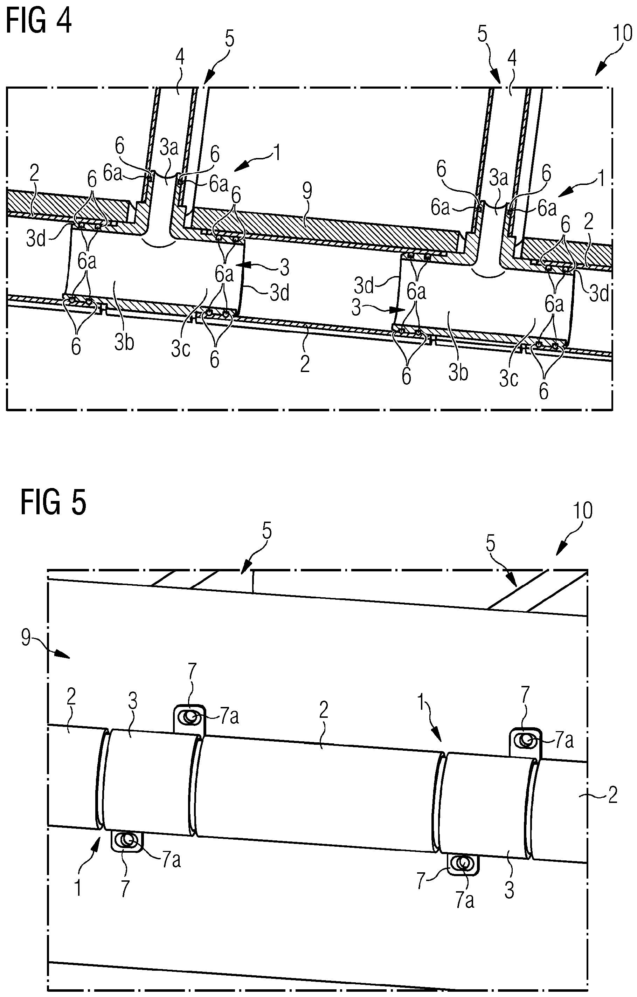

In FIG 4 ist eine perspektivische Schnittansicht eines Kühlmittelverteilsystems 10 mit zwei nebeneinander angeordneten Kühlmittelsammeleinrichtungen 1 gemäß einem Ausführungsbeispiel der Erfindung gezeigt. Die Kühlmittelsammeleinrichtungen 1 umfassen jeweils zwei starre Kühlmittelsammelrohre 2, die sich parallel zu der Stirnfläche des Kühlmittelverteilsystems 10, auch als Kühlprofilplatte 9 bezeichnet, erstrecken und durch ein T-förmiges Verbindungsstück 3 mit drei rohrförmigen Verbindungselementen 3a, 3b, 3c miteinander in Verbindung gebracht sind.

Ein erstes rohrförmiges Verbindungselement 3a der drei rohrförmigen Verbindungselemente 3a, 3b, 3c des T-förmigen Verbindungsstücks 3, welches in FIG 4 in vertikaler Richtung verlaufend gezeichnet ist, steckt in einem Kühlmittelkanal 4 eines Batterie-Kühlprofils 5. Dieses erste rohrförmige Verbindungselement 3a umfasst eine ringförmige Nut 6, in der sich ein Dichtelement 6a, in diesem Fall ein O-Ring, befindet.

Es werden also jeweils zwei starre Kühlmittelsammelrohre 2 von einem T-förmigen Verbindungsstück 3 zusammengeführt. Hierzu werden die beiden starren Kühlmittelsammelrohre 2 durch Aufstecken der beiden starren Kühlmittelsammelrohre 2 auf die hinsichtlich ihres Außendurchmessers leicht verjüngten Enden bzw. Endabschnitte 3d der zweiten und dritten rohrförmigen Verbindungselemente 3b, 3c eines jeweiligen T-förmigen Verbindungsstücks 3 aufgesteckt. Die zweiten und dritten rohrförmigen Verbindungselemente 3b, 3c sind in FIG 4 in beinahe horizontaler Richtung verlaufend dargestellt.

Die verjüngten Endabschnitte 3d der zweiten und dritten rohrförmigen Verbindungselemente 3b, 3c weisen jeweils zwei ringförmige Nuten 6 auf, welche Dichtungen in Form von O-Ringen 6a aufnehmen. Die O-Ringe 6a bilden eine Dichtung zwischen der Außenfläche der verjüngten Endabschnitte 3d der zweiten und dritten rohrförmigen Verbindungselemente 3b, 3c und der Innenfläche der starren Kühlmittelsammelrohre 2. Mit diesen O-Ringen 6a wird ein Austreten von Kühlflüssigkeit an der Verbindungsstelle zwischen den zweiten und dritten rohrförmigen Verbindungselementen 3b, 3c und den starren Kühlmittelsammelrohren 2 verhindert.

In FIG 5 ist eine Draufsicht auf ein Kühlmittelverteilsystem 10 mit zwei Kühlmittelsammeleinrichtungen 1 gemäß einem Ausführungsbeispiel der Erfindung gezeigt. Jede der Kühlmittelsammeleinrichtungen 1 ist mit zwei laschenartigen Schraubstellen 7 versehen, die auf der Stirnfläche des Batterie-Kühlmittelverteilsystems 10 bzw. der Kühlprofilplatte 9 verschraubbar sind. Die Schraubstellen 7 sind einstückig mit T-förmigen Verbindungsstücken 3 einer Kühlmittelsammeleinrichtung 1 verbunden und bilden laschenartige Strukturen mit Schraublöchern. Die Schraublöcher sind als Langlöcher ausgebildet und gleichen so Toleranzen der Abstände zwischen einzelnen Kühlmittelkanälen 4 eines Batterie-Kühlprofils 5 aus. In der Kühlprofilplatte 9 ist in axialer Richtung der Kühlmittelsammelrohre 2 versetzt auf beiden Seiten der T-förmigen Verbindungsstücke 3 jeweils eine Bohrung 7a mit einem Innengewinde ausgebildet. Eine solche Bohrung 7a nimmt jeweils eine durch ein Langloch bzw. Schraubloch einer Schraubstelle 7 gesteckte Befestigungsschraube (nicht gezeigt) auf.

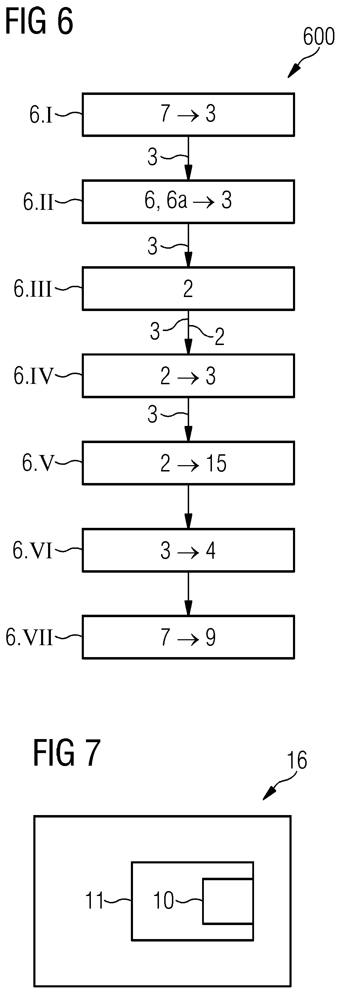

In FIG 6 ist ein Flussdiagramm 600 gezeigt, welches ein Verfahren zum Herstellen eines Batterie-Kühlmittelverteilsystems 10 gemäß einem Ausführungsbeispiel der Erfindung veranschaulicht.

Bei dem Schritt 6.I wird ein T-förmiges Verbindungsstück 3 mit drei rohrförmigen Verbindungselementen 3a, 3b, 3c ausgebildet. Dabei wird ein erstes Verbindungselement 3a der drei rohrförmigen Verbindungselemente 3a, 3b, 3c, welches quer zu den anderen beiden rohrförmigen Verbindungselementen 3b, 3c orientiert ist, für eine Aufnahme in einem Kühlmittelkanal 4 eines Batterie-Kühlprofils 5 ausgebildet. Das T-förmige Verbindungsstück 3 wird auch mit zwei in Axialrichtung versetzt angeordneten Schraubstellen 7 versehen, die später bei der Montage mit Befestigungsschrauben an der Kühlprofilplatte 9 eines Batterie-Kühlprofils 5 verankert werden.

Bei dem Schritt 6.II wird das T-förmige Verbindungsstück 3 auf seiner Außenseite mit insgesamt 5 in Umfangsrichtung verlaufenden Nuten 6 versehen. Dabei wird an dem ersten rohrförmigen Verbindungselement 3a eine einzige Nut 6 ausgebildet und an dem zweiten und dritten rohrförmigen Verbindungselement 3b, 3c werden jeweils zwei nebeneinander verlaufende Nuten 6 ausgebildet. Weiterhin wird in den Nuten 6 jeweils ein O-Ring 6a platziert. Die Enden bzw. Endabschnitte 3d der zweiten und dritten rohrförmigen Verbindungselemente 3b, 3c werden im Vergleich zu dem Mittenbereich des T-förmigen Verbindungsstücks mit kleinerem Außendurchmesser bzw. verjüngt ausgebildet, damit später starre Kühlmittelsammelrohre 2 auf die verjüngten Enden bzw. Endabschnitte 3d aufgesetzt werden können.

Bei dem Schritt 6.III werden zwei starre Kühlmittelsammelrohre 2 mit einem Innendurchmesser, der dieselbe Größe bzw. eine Größe mit einem minimal höheren Wert hat als der Außendurchmesser der verjüngten Endabschnitte 3d von zwei gegenüberliegenden Verbindungselementen 3b, 3c der drei rohförmigen Verbindungselemente 3a, 3b, 3c, ausgebildet. Der minimal größere Innendurchmesser der beiden starren Kühlmittelsammelrohre 2 ermöglicht ein Aufsetzen der starren Kühlmittelsammelrohre 2 auf die verjüngten Endabschnitte 3d der einander gegenüberliegenden Verbindungselemente 3b, 3c.

Bei dem Schritt 6.IV wird das T-förmige Verbindungsstück 3 zwischen den bei dem Schritt 6.III hergestellten starren Kühlmittelsammelrohren 2 angeordnet. Bei dem Zusammenfügen der zwei gegenüberliegenden Verbindungselemente 3b, 3c mit den starren Kühlmittelsammelrohren 2 werden die O-Ringe 6a in den Nuten 6 der beiden gegenüberliegenden Verbindungselemente 3b, 3c etwas deformiert, so dass sie eine Abdichtung zwischen den beiden zusammengefügten Elementen 2, 3 bilden.

Bei dem Schritt 6.V werden die äußeren starren Kühlmittelsammelrohre 2, welche nur mit einem Ende mit einem T-förmigen Verbindungsstück 3 verbunden sind, direkt über eine Schnellkupplung mit einem Anschlussschlauch 15 verbunden. Dieser Anschlussschlauch 15 ist länger als bei einer herkömmlichen Anordnung und endet im Gegensatz zu der herkömmlichen Anordnung (siehe FIG 2) direkt in einer Schnellkupplung am Ende des Anschlussschlauchs 15. Es entfällt somit der in FIG 2 gezeigte zusätzliche Anschluss 15a.

Weiterhin wird bei dem Schritt 6.VI das erste 3a der drei rohrförmigen Verbindungselemente 3a, 3b, 3c des T-förmigen Verbindungsstücks 3 in einen in einem Batterie-Kühlprofil 5 verlaufenden Kühlmittelkanal 4 eines Batterie-Kühlmittelverteilsystems 10 (siehe FIG 4) eingefügt.

Schließlich werden bei dem Schritt 6.VII Befestigungsschrauben durch die Schraubstellen 7 der T-förmigen Verbindungsstücke 3 gesteckt und mit der Kühlprofilplatte 9 des Batterie-Kühlprofils 5 verschraubt.

Eine Mehrzahl von T-förmigen Verbindungsstücken 3 und starren Kühlmittelsammelrohren 2 werden auf diese Weise aneinandergefügt, so dass sie eine serielle kettenförmige Anordnung bilden. Die äußeren starren Kühlmittelsammelrohre 2, welche nur mit einem Ende mit einem T-förmigen Verbindungsstück 3 verbunden sind, werden direkt über eine Schnellkupplung mit einem Anschlussschlauch 15 bzw. Zufuhrschlauch oder Abfuhrschlauch verbunden. Dieser Anschlussschlauch 15 ist länger als bei einer herkömmlichen Anordnung und endet im Gegensatz zu der herkömmlichen Anordnung (siehe FIG 2) direkt in einer Schnellkupplung am Ende des Anschlussschlauchs 15 bzw. in einer Verbindung mit einem äußeren starren Kühlmittelsammelrohr 2. Es entfällt somit der in FIG 2 gezeigte zusätzliche Anschluss 15a.

In FIG 7 ist ein Fahrzeug 16 mit einer elektrischen Fahrzeugbatterie 11, insbesondere eine Traktionsbatterie, dargestellt. Die elektrische Fahrzeugbatterie 11 umfasst ein Batterie-Kühlmittelverteilsystem 10 gemäß einem Ausführungsbeispiel der Erfindung.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung, der durch die Ansprüche vorgegeben ist, zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten, die gegebenenfalls auch räumlich verteilt sein können, besteht.

## Patentansprüche

1. Kühlmittelsammeleinrichtung (1), aufweisend:
- zwei starre Kühlmittelsammelrohre (2), welche eine durch äußere und innere Einwirkung weitgehend unveränderbare Form und Struktur aufweisen,
- ein T-förmiges Verbindungsstück (3) mit drei rohrförmigen Verbindungselementen (3a, 3b, 3c),
wobei
- das T-förmige Verbindungsstück (3) zwischen den starren Kühlmittelsammelrohren (2) angeordnet ist und ein erstes der drei rohrförmigen Verbindungselemente (3a, 3b, 3c), welches quer zu den anderen rohrförmigen Verbindungselementen (3a, 3b, 3c) orientiert ist, für eine Aufnahme in einem Kühlmittelkanal (4) eines Batterie-Kühlprofils (5) ausgebildet ist und
- die zwei starren Kühlmittelsammelrohre (2) mit einem zu einem Querschnitt von zwei gegenüberliegenden zweiten und dritten Verbindungselementen (3b, 3c) der drei rohförmigen Verbindungselemente (3a, 3b, 3c) passenden Querschnitt ausgebildet sind und mit den zweiten und dritten rohrförmigen Verbindungselementen (3b, 3c) verbunden sind,
wobei
- das T-förmige Verbindungsstück (3) eine Fixiereinheit zum Fixieren des T-förmigen Verbindungsstücks (3) an dem Batterie-Kühlprofil (5) aufweist,
- die Fixiereinheit eine Schraubstelle (7) zum Verschrauben der Fixiereinheit mit dem Batterie-Kühlprofil (5) aufweist und
- die starren Kühlmittelsammelrohre (2) schwimmend mit dem T-förmigen Verbindungsstück (3) verbunden sind.

2. Kühlmittelsammeleinrichtung nach Anspruch 1, aufweisend ein Dichtelement (6a) zur Abdichtung zwischen dem ersten rohrförmigen Verbindungselement (3a) und dem Kühlmittelkanal (4) .

3. Kühlmittelsammeleinrichtung nach Anspruch 2, wobei das Dichtelement (6a) einen O-Ring umfasst.

4. Kühlmittelsammeleinrichtung nach einem der vorstehenden Ansprüche, wobei das zweite und dritte rohrförmige Verbindungselement (3b, 3c) jeweils einen verjüngten Endabschnitt (3d) aufweisen und der Innendurchmesser der starren Kühlmittelsammelrohre (2) gleich dem Außendurchmesser der verjüngten Endabschnitte (3d) der zweiten und dritten rohrförmigen Verbindungselemente (3b, 3c) ist.

5. Kühlmittelsammeleinrichtung nach Anspruch 4, wobei die verjüngten Endabschnitte (3d) der zweiten und dritten rohrförmigen Verbindungselemente (3b, 3c) einen im Vergleich zu einem Mittenabschnitt, der den Übergang zwischen den zweiten und dritten rohrförmigen Verbindungselementen (3b, 3c) bildet, verkleinerten Außendurchmesser aufweisen.

6. Kühlmittelsammeleinrichtung nach Anspruch 4 oder 5, wobei der Außendurchmesser der verjüngten Endabschnitte (3d) beinahe denselben Wert aufweist wie der Innendurchmesser der starren Kühlmittelsammelrohre (2) und der Außendurchmesser der starren Kühlmittelsammelrohre (2) denselben Außendurchmesser wie der Außendurchmesser des jeweiligen T-förmigen Verbindungsstücks (3) im nicht verjüngten Mittenbereich des T-förmigen Verbindungsstücks (3) aufweist.

7. Kühlmittelsammeleinrichtung nach einem der Ansprüche 4 bis 6, wobei der Übergang zwischen den verjüngten Endabschnitten (3d) der starren Kühlmittelsammelrohre (2) und dem Mittenbereich des T-förmigen Verbindungsstücks (3) stufenförmig ausgebildet ist.

8. Kühlmittelsammeleinrichtung nach einem der vorstehenden Ansprüche, wobei die zweiten und dritten rohrförmigen Verbindungselemente (3b, 3c) des T-förmigen Verbindungsstücks (3), bevorzugt die verjüngten Endabschnitte (3d) der zweiten und dritten rohrförmigen Verbindungselemente (3b, 3c) des T-förmigen Verbindungsstücks (3), jeweils mindestens eine Nut (6) aufweisen, welche ein Dichtelement (6a) aufnimmt.

9. Batterie-Kühlmittelverteilsystem (10) für ein Fahrzeug (16), aufweisend
- ein Batterie-Kühlprofil (5) mit einem darin verlaufenden Kühlmittelkanal (4),
- eine Kühlmittelsammeleinrichtung (1) nach einem der Ansprüche 1 bis 8.

10. Fahrzeug (16), aufweisend eine elektrische Batterie mit einem Batterie-Kühlmittelverteilsystem (10) nach Anspruch 9.

11. Verfahren zum Herstellen einer Kühlmittelsammeleinrichtung (1), aufweisend die Schritte:
- Ausbilden eines T-förmigen Verbindungsstücks (3) mit drei rohrförmigen Verbindungselementen (3a, 3b, 3c) mit einem ersten (3a) der drei rohrförmigen Verbindungselemente (3a, 3b, 3c), welches quer zu den anderen rohrförmigen Verbindungselementen (3a, 3b, 3c) orientiert ist, für eine Aufnahme in einem Kühlmittelkanal (4) eines Batterie-Kühlprofils (5), und mit einer Fixiereinheit zum Fixieren des T-förmigen Verbindungsstücks (3) an dem Batterie-Kühlprofil (5), welche eine Schraubstelle (7) zum Verschrauben der Fixiereinheit mit dem Batterie-Kühlprofil (5) aufweist,
- Ausbilden von zwei starren Kühlmittelsammelrohren (2), welche eine durch äußere und innere Einwirkung weitgehend unveränderbare Form und Struktur aufweisen,
mit einem zu einem Querschnitt von zwei gegenüberliegenden zweiten und dritten Verbindungselementen (3b, 3c) der drei rohförmigen Verbindungselemente (3a, 3b, 3c) passenden Querschnitt,
- Anordnen des T-förmigen Verbindungsstücks (3) zwischen den starren Kühlmittelsammelrohren (2) und Verbinden der zweiten und dritten Verbindungselemente (3b, 3c) des T-förmigen Verbindungsstücks (3) mit den starren Kühlmittelsammelrohren (2), wobei die starren Kühlmittelsammelrohre (2) schwimmend mit dem T-förmigen Verbindungsstück (3) verbunden werden.

12. Verfahren zum Herstellen eines Batterie-Kühlmittelverteilsystems (10), aufweisend die Schritte:
- Durchführen des Verfahrens nach Anspruch 11,
- Einfügen des ersten (3a) der drei rohrförmigen Verbindungselemente (3a, 3b, 3c) des T-förmigen Verbindungsstücks (3) in einen Kühlmittelkanal (4) eines Batterie-Kühlprofils (5).

## Claims

1. Coolant-collecting device (1) having:
- two rigid coolant-collecting tubes (2) which have a shape and structure largely unable to be changed by external and internal action,
- a T-shaped connecting piece (3) with three tubular connecting elements(3a, 3b, 3c),
wherein
- the T-shaped connecting piece (3) is arranged between the rigid coolant-collecting tubes (2), and a first one of the three tubular connecting elements (3a, 3b, 3c), which is oriented transversely to the other tubular connecting elements (3a, 3b, 3c), is designed for being received in a coolant channel (4) of a battery cooling profile (5), and
- the two rigid coolant-collecting tubes (2) are designed with a cross section which is compatible with a cross section of two opposite second and third connecting elements (3b, 3c) of the three tubular connecting elements (3a, 3b, 3c) and are connected to the second and third tubular connecting elements (3b, 3c),
wherein
- the T-shaped connecting piece (3) has a fixing unit for fixing the T-shaped connecting piece (3) to the battery cooling profile (5),
- the fixing unit has a screw-connection point (7) for screw connection of the fixing unit to the battery cooling profile (5), and
- the rigid coolant-collecting tubes (2) are connected in a floating manner to the T-shaped connecting piece (3).

2. Coolant-collecting device according to Claim 1, having a sealing element (6a) for sealing between the first tubular connecting element (3a) and the coolant channel (4).

3. Coolant-collecting device according to Claim 2, wherein the sealing element (6a) comprises an O-ring.

4. Coolant-collecting device according to one of the preceding claims, wherein the second and third tubular connecting elements (3b, 3c) each have a narrowed end portion (3d), and the inner diameter of the rigid coolant-collecting tubes (2) is equal to the outer diameter of the narrowed end portions (3d) of the second and third tubular connecting elements (3b, 3c).

5. Coolant-collecting device according to Claim 4, wherein the narrowed end portions (3d) of the second and third tubular connecting elements (3b, 3c) have an outer diameter which, in comparison with a middle portion which forms the transition between the second and third tubular connecting elements (3b, 3c), is reduced.

6. Coolant-collecting device according to Claim 4 or 5, wherein the outer diameter of the narrowed end portions (3d) has almost the same value as the inner diameter of the rigid coolant-collecting tubes (2), and the outer diameter of the rigid coolant-collecting tubes (2) has the same outer diameter as the outer diameter of the respective T-shaped connecting piece (3) in the non-narrowed middle region of the T-shaped connecting piece (3).

7. Coolant-collecting device according to one of Claims 4 to 6, wherein the transition between the narrowed end portions (3d) of the rigid coolant-collecting tubes (2) and the middle region of the T-shaped connecting piece (3) is of stepped form.

8. Coolant-collecting device according to one of the preceding claims, wherein the second and third tubular connecting elements (3b, 3c) of the T-shaped connecting piece (3), preferably the narrowed end portions (3d) of the second and third tubular connecting elements (3b, 3c) of the T-shaped connecting piece (3), each have at least one groove (6) which receives a sealing element (6a).

9. Battery coolant-distributing system (10) for a vehicle (16), having
- a battery cooling profile (5) with a coolant channel (4) extending therein,
- a coolant-collecting device (1) according to one of Claims 1 to 8.

10. Vehicle (16) having an electric battery with a battery coolant-distributing system (10) according to Claim 9.

11. Method for producing a coolant-collecting device (1), comprising the steps of:
- designing a T-shaped connecting piece (3) with three tubular connecting elements (3a, 3b, 3c) with a first one (3a) of the three tubular connecting elements (3a, 3b, 3c), which is oriented transversely to the other tubular connecting elements (3a, 3b, 3c), for being received in a coolant channel (4) of a battery cooling profile (5), and with a fixing unit for fixing the T-shaped connecting piece (3) to the battery cooling profile (5), said fixing unit having a screw-connection point (7) for screw connection of the fixing unit to the battery cooling profile (5),
- designing two rigid coolant-collecting tubes (2), which have a shape and structure largely unable to be changed by external and internal action,
with a cross section which is compatible with a cross section of two opposite second and third connecting elements (3b, 3c) of the three tubular connecting elements (3a, 3b, 3c),
- arranging the T-shaped connecting piece (3) between the rigid coolant-collecting tubes (2), and connecting the second and third connecting elements (3b, 3c) of the T-shaped connecting piece (3) to the rigid coolant-collecting tubes (2), wherein the rigid coolant-collecting tubes (2) are connected in a floating manner to the T-shaped connecting piece (3).

12. Method for producing a battery coolant-distributing system (10), comprising the steps of:
- carrying out the method according to Claim 11,
- inserting the first one (3a) of the three tubular connecting elements (3a, 3b, 3c) of the T-shaped connecting piece (3) into a coolant channel (4) of a battery cooling profile (5).

## Revendications

1. Dispositif de collecte de fluide de refroidissement (1) présentant :
- deux tubes rigides de collecte de fluide de refroidissement (2) qui présentent une forme et une structure fondamentalement inaltérables sous l'effet d'une influence externe et interne,
- une pièce de raccordement en forme de T (3) avec trois éléments de raccordement tubulaires (3a, 3b, 3c),
dans lequel
- la pièce de raccordement en forme de T (3) est disposée entre les tubes rigides de collecte de fluide de refroidissement (2) et un premier parmi les trois éléments de raccordement tubulaires (3a, 3b, 3c), qui est orienté transversalement par rapport aux autres éléments de raccordement tubulaires (3a, 3b, 3c), est conçu pour être reçu dans un canal de refroidissement (4) d'un profilé de refroidissement de batterie (5), et
- les deux tubes rigides de collecte de fluide de refroidissement (2) sont conçus avec une coupe transversale adaptée à une coupe transversale de deux deuxièmes et troisièmes éléments de raccordement opposés (3b, 3c) parmi les trois éléments de raccordement tubulaires (3a, 3b, 3c) et sont liés aux deuxièmes et troisièmes éléments de raccordement tubulaires (3b, 3c),
dans lequel
- la pièce de raccordement en forme de T (3) présente une unité de fixation pour fixer la pièce de raccordement en forme de T (3) au profilé de refroidissement de batterie (5),
- l'unité de fixation présente un orifice de vissage (7) pour visser l'unité de fixation au profilé de refroidissement de batterie (5) et
- les tubes rigides de collecte de fluide de refroidissement (2) sont liés de façon flottante à la pièce de raccordement en forme de T (3).

2. Dispositif de collecte de fluide de refroidissement selon la revendication 1, présentant un élément d'étanchéité (6a) pour assurer l'étanchéité entre le premier élément de raccordement (3a) et un canal de refroidissement (4).

3. Dispositif de collecte de fluide de refroidissement selon la revendication 2, dans lequel l'élément d'étanchéité (6a) comprend un joint.

4. Dispositif de collecte de fluide de refroidissement selon l'une des revendications précédentes, dans lequel le deuxième et le troisième élément de raccordement (3b, 3c) présentent respectivement une section terminale rétrécie (3d) et dans lequel le diamètre interne des tubes rigides de collecte de fluide de refroidissement (2) est égal au diamètre externe des sections terminales rétrécies (3d) des deuxièmes et troisièmes éléments de raccordement (3b, 3c).

5. Dispositif de collecte de fluide de refroidissement selon la revendication 4, dans lequel la section terminale rétrécie (3d) du deuxième et du troisième élément de raccordement (3b, 3c) présentent un diamètre externe rétréci par rapport à une section médiane qui constitue la transition entre les deuxièmes et troisièmes éléments de raccordement tubulaires (3b, 3c).

6. Dispositif de collecte de fluide de refroidissement selon la revendication 4 ou 5, dans lequel le diamètre externe des sections terminales rétrécies (3d) présente quasiment la même valeur que le diamètre interne des tubes rigides de collecte de fluide de refroidissement (2) et le diamètre externe des tubes rigides de collecte de fluide de refroidissement (2) présente le même diamètre externe que le diamètre externe de la pièce de raccordement en forme de T (3) respective dans la zone médiane non rétrécie de la pièce de raccordement en forme de T (3).

7. Dispositif de collecte de fluide de refroidissement selon l'une des revendications 4 à 6, dans lequel la transition entre les sections terminales rétrécies (3d) des tubes rigides de collecte de fluide de refroidissement (2) et la zone médiane de la pièce de raccordement en forme de T (3) est conçue en forme étagée.

8. Dispositif de collecte de fluide de refroidissement selon l'une des revendications précédentes, dans lequel le deuxième et le troisième élément de raccordement (3b, 3c) de la pièce de raccordement en forme de T (3), préférentiellement les sections terminales rétrécies (3d) du deuxième et du troisième élément de raccordement (3b, 3c) de la pièce de raccordement en forme de T (3), présentent respectivement une rainure (6) qui accueille un élément d'étanchéité (6a).

9. Système de distribution de fluide de refroidissement de batterie (10) pour un véhicule (16), présentant
- un profilé de refroidissement de batterie (5) avec un canal de refroidissement (4) à l'intérieur,
- un dispositif de collecte de fluide de refroidissement (1) selon l'une des revendications 1 à 8.

10. Véhicule (16) présentant une batterie électrique avec un système de distribution de fluide de refroidissement de batterie (10) selon la revendication 9.

11. Procédé de fabrication d'un dispositif de collecte de fluide de refroidissement (1) présentant les étapes de :
- fabrication d'une pièce de raccordement en forme de T (3) avec trois éléments de raccordement tubulaires (3a, 3b, 3c), avec un premier (3a) parmi les trois éléments de raccordement tubulaires (3a, 3b, 3c) qui est orienté transversalement par rapport aux autres éléments de raccordement tubulaires (3a, 3b, 3c), pour accueillir dans un canal de refroidissement (4) un profilé de refroidissement de batterie (5), et avec une unité de fixation pour fixer la pièce de raccordement en forme de T (3) au profilé de refroidissement de batterie (5), qui présente un orifice de vissage (7) pour visser l'unité de fixation au profilé de refroidissement de batterie (5),
- fabrication de deux tubes rigides de collecte de fluide de refroidissement (2) qui présentent une forme et une structure fondamentalement inaltérables sous l'effet d'une influence externe et interne, avec une coupe transversale adaptée à une coupe transversale de deux deuxièmes et troisièmes éléments de raccordement opposés (3b, 3c) parmi les trois éléments de raccordement tubulaires (3a, 3b, 3c),
- disposition de la pièce de raccordement en forme de T (3) entre les tubes rigides de collecte de fluide de refroidissement (2) et raccordement du deuxième et du troisième élément de raccordement (3b, 3c) de la pièce de raccordement en forme de T (3) avec les tubes rigides de collecte de fluide de refroidissement (2), dans laquelle les tubes rigides de collecte de fluide de refroidissement (2) sont liés de façon flottante à la pièce de raccordement en forme de T (3).

12. Procédé de fabrication d'un système de distribution de fluide de refroidissement de batterie (10), comprenant les étapes constituées de :
- réalisation du procédé selon la revendication 11,
- introduction du premier (3a) des trois éléments de raccordement tubulaires (3a, 3b, 3c) de la pièce de raccordement en forme de T (3) dans un canal de refroidissement (4) d'un profilé de refroidissement de batterie (5).
